# EUROPEAN PATENT SPECIFICATION

(11) **EP 0 435 834 B1**
(45) Date of publication and mention of the grant of the patent: **05.04.1995**
(21) Application number: 90830569.1
(22) Date of filing: 05.12.1990
(51) Int. Cl.: F16F 9/43

(54) **Device for checking and recharging car dampers using high-pressure gas**
Vorrichtung zur Überprüfung und Nachfüllung von Fahrzeugstossdämpfern unter Hochdruckgasverwendung
Dispositif de contrôle et de recharge pour les amortisseurs d'un vehicule utilisant du gaz à haute pression

(30) Priority: 11.12.1989 IT 6650489
(43) Date of publication of application: 03.07.1991
(73) Proprietor: Marini, Giuseppe, I-64100 Teramo (IT)
(72) Inventor: Marini, Giuseppe, I-64100 Teramo (IT)
(74) Representative: Sarpi, Maurizio

(56) References cited:
- EP-A- 0 257 682
- WO-A-89/01578
- DE-A- 2 843 605
- DE-A- 3 446 407
- DE-U- 8 601 331
- FR-A- 2 167 921
- FR-A- 2 611 843

## Description

The present invention relates to a device for checking and recharging the car dampers using high-pressure gas cartridges.

Motor industry has always given much importance to studying and designing shock absorber systems because the latter have been assigned with the task of assuring the comfort of the car passengers but above all the road-holding and then the safety of the car itself.

Some manufacturers have for some time studied and designed dampers, in particular for cars, using cartridges filled with high-pressure gas (the socalled "air springs").

Even if such shock absorbers assure on the one hand a good comfort and road-holding, on the other hand they have several technical and economical drawbacks.

High-pressure gas, generally nitrogen, is usually contained in a pneumatic, sealed cartridge which is received in a metallic sealed hardly accessible casing.

In case of decompression due to wear or other causes, the check in the workshop can only be performed by disassembling the mounting parts of the damper. Besides, if a lack of gas is ascertained, this can only be obviated by replacing the above mentioned mounting parts.

It is self-evident from the foregoing that the increase in the maintenance cost of the car is very high irrespective of the drawbacks caused by the car stop since the operation is time consuming and rather complicated.

From EP -A-0 257 682 a device according to the preamble of claim 1 for checking and recharging car dampers using high-pressure gas is known, which comprises a check valve applied to the damper and provided with connecting means for a charging assembly providing for the inner pressure to be checked and the gas to be let in until the desired pressure is obtained. The check valve comprises an outer axial internally threaded chamber and a ball biased by a spring and capable of a controlled axial movement, which is located within the damper, the threaded chamber being connected to the working seating of the ball by an axial bore cooperating with a needle of a connecting sleeve which actuates the charging assembly during introduction of gas into the damper.

However, such a device does not fully meet the requirements as it can be mounted to the damper only after the silencer or the damper of the vehicle is disassembled even if the size thereof is reduced. Additionally, the presence of a thrust spring on the valve spear does not allow the inner pressure of the damper to be measured directly from the outside by a pressure gauge and requires a pressure regulator when the damper should be charged. A further drawback is that controlling from the outside the opening of a valve by a tool is very difficult once the connecting sleeve with the charging assembly is removed, as for example it would be necessary to reduce the pressure in an overcharged damper.

On the other hand the use of a needle valve, such as for example that described in WO 89/01578, replacing the ball valve does not fully solve such problems because it is too complex, expensive and cumbersome.

This invention seeks to provide a device to solve easily and effectively the above mentioned problems.

According to the invention a device is provided comprising a body of valve which is mounted on each shock absorber or damper and provided with a threaded outer seat allowing a manometer joint connected to a pressurized-gas supplying unit to be applied thereon, a needle shutter slideable within said valve body in an axial through hole connecting a inner room placed under said threaded outer seat to a countersunk seat at the bottom of said body located within the damper, said needle shutter carrying at the upper end a nut concentrically located with respect to the threaded seat of the manometer joint within said inner room therebelow, and at the lower end a closure head provided with an annular gasket sealing said countersunk seat against the gas pressure.

In this manner a manometer joint is able to check the inner pressure and to let in pressurized gas until the former pressure is restored.

When said checking manometer joint is removed said needle valve is automatically closed so as to prevent gas from being discharged. Under such conditions the damper acts as if it were sealed.

This invention will be now described with reference to the annexed drawing showing only by way of example a non-limitative, preferred embodiment of the invention. In the drawing:
Fig. 1 shows an axial section of the device of the invention in enlarged scale;
Fig. 2 shows schematically the device mounted on compressed gas damper of the known, widespread type.

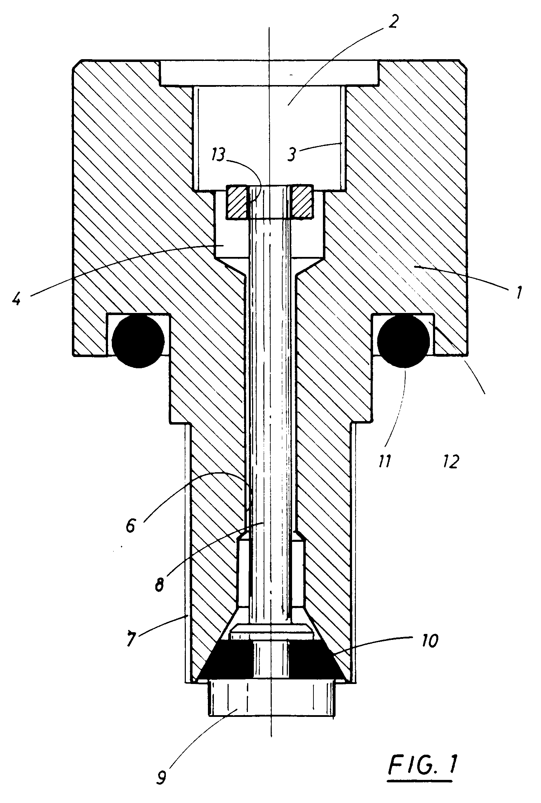

With reference to Fig. 1 numeral 1 designates the valve body carrying at the top a seat 2 provided with a thread 3 and connected to the inner room 4 and the axial through-hole 6.

Provided at the base of valve body 1 is an outer thread 7 allowing the device to be mounted as illustrated afterwards.

A needle valve is slideable in axial through hole 6, said valve being provided with rod 8 having a quite smaller diameter than that of said through hole and being provided with a lower end formed of a closure head 9 provided with a gasket 10. A second sealing gasket or O-ring indicated at 11 is applied into the annular seat 12 formed in body 1. At the upper end of rod 8 a nut 13 is screwed, the function of which will be explained afterwards.

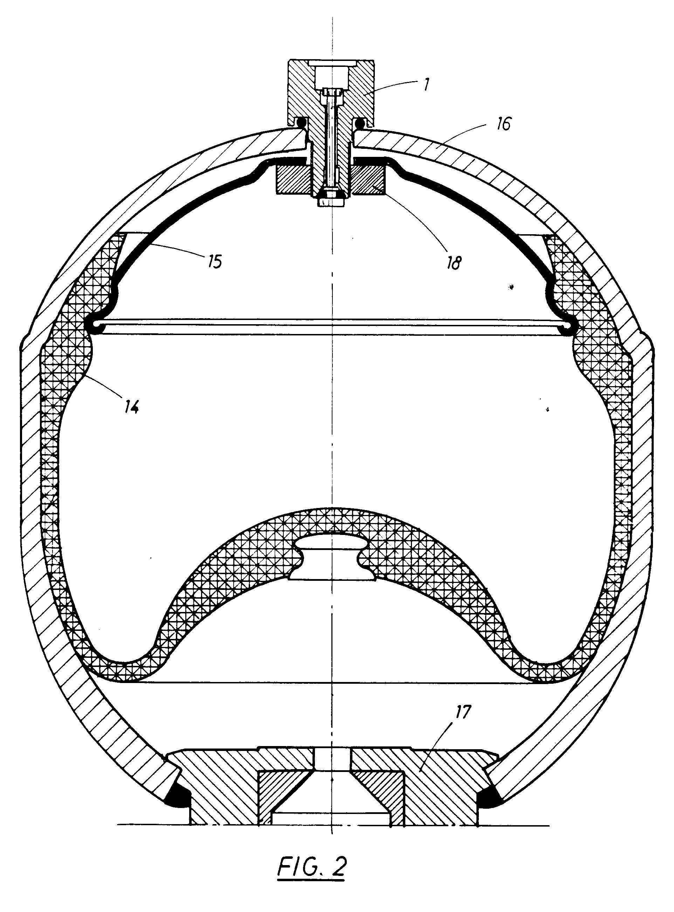

In Fig. 2 a shock absorber or damper is schematically shown by way of example. It comprises a pneumatic cartridge 14 filled with high-pressure gas and sealingly mounted on cap 15 contained in casing 16. Provided at the base is the bottom head 17 connecting the cartridge to other mechanical parts of the suspension which are not shown as not belonging to this invention.

Valve 1 is mounted as shown in Fig. 2 with thread 7 screwed through casing 16 and engaging the inner block 18. Of course valve 1 is gas-tightly mounted on the damper. To this end the already described O-ring 11 is provided.

In the operation, if one has to check the inner pressure (Fig. 1) a manometer joint (not-shown) is screwed in thread 3 so as to engage nut 13, thus causing needle valve 8 to temporary open. Thus the inner pressure can be measured and gas may be let in until the right pressure is restored. Afterwards the manometer joint is disconnected from thread 3 and closure head 9 provides for the hermetic sealing of the valve.

The same operation is repeated for all dampers of the suspension system of the car.

The present invention has been illustrated and described with reference to a preferred embodiment but it should be understood that construction changes can be made by a skilled in the art without parting from the scope of protection of this industrial invention.

## Claims

1. A device for checking and recharging car dampers using high-pressure gas, consisting of a check valve (1) applied to the damper (14) and provided with connecting means for a charging assembly providing for the inner pressure to be checked and the gas to be let in until the desired pressure is restored, said connecting means comprising a threaded outer seat (2, 3), characterized in that said valve (1) comprises a body with a needle shutter (8) slideable in an axial through hole (6) connecting the threaded outer seat (2, 3) allowing a manometer joint connected to a pressurized gas supplying unit to be applied thereon, with a countersunk seat at the bottom of said body located within the damper (14), said needle shutter (8) carrying at the upper end a nut (13) concentrically located with respect to said threaded seat (2, 3) within a communicating underlying inner room (4), and at the lower end a closure head (9) provided with an annular gasket (10) sealing said countersunk seat under the gas pressure.

2. The device of the preceding claims, characterized in that the needle shutter (8) is formed of a rod having a quite smaller diameter than that of the hole (6).

3. The device of the preceding claims, characterized in that said nut (13) causes the needle valve (1) to open when gas is let in at a higher pressure than that within the damper (14) until the desired pressure value is reached, the gas being prevented from being discharged from the inside of said damper to the outside.

## Patentansprüche

1. Vorrichtung zur Prüfung und zur Wiederaufladung von hohen Gasdruck benutzenden Wagendämpfern mit einem Sperrventil bzw. Rückschlagventil (1), das an den Dämpfer (14) angeschlossen und mit einer Verbindung zu einer Ladeeinheit versehen ist, damit der Innendruck geprüft und Gas eingelassen werden kann, wenn der gewünschte Druck wieder hergestellt werden soll, wobei die Verbindung einen gewindeaufweisenden Außensitz (2, 3) aufweist,
**dadurch gekennzeichnet,**
daß das Ventil (1) einen Körper mit einem nadelförmigen Verschluß (8) aufweist, der in einem axialen Durchgangsloch (6) gleitbar ist, welches den gewindeaufweisenden Außensitz (2, 3) verbindet, um einen Manometeranschluß, der mit einer anschließbaren Druckgasquelle verbunden ist, mit einem versenkten Sitz am Boden des Körpers zu verbinden, der sich im Dämpfer (14) befindet, und daß der nadelförmige Verschluß (8) am oberen Ende eine Mutter bzw. einen Gewindering (13) trägt, die/der in Bezug auf den Gewindesitz (2, 3) innerhalb eines verbindenden darunter angeordneten Raumes (4) konzentrisch angeordnet ist, und daß ein Verschlußkopf (9) am unteren Ende mit einer ringförmigen Abdichtung (10) versehen ist, welche den versenkten Sitz unter dem Gasdruck abdichtet.

2. Vorrichtung nach Anspruch 1,
**dadurch gekennzeichnet,**
daß der nadelförmige Verschluß (8) als Bolzen ausgebildet ist, der einen deutlich geringeren Durchmesser als das Loch (6) aufweist.

3. Vorrichtung nach Anspruch 1 oder 2,
**dadurch gekennzeichnet,**
daß die Mutter bzw. der Gewindering (13) das Nadelvintil (1) zum Öffnen drängt, wenn Gas mit einem höheren Druck als dem Druck innerhalb des Dämpfers (14) eingelassen wird, bis der gewünschte Druckwert erreicht ist, und daß das Gas daran gehindert ist, sich von innerhalb des Dämpfers zu dessen Außenseite zu entladen.

## Revendications

1. Dispositif de vérification et de recharge des amortisseurs d'automobile fonctionnant au moyen d'un gaz sous pression, comportant une soupape de vérification (1) montée sur l'amortissement (14) et munie de moyens de liaison à un ensemble de charge fournissant la pression interne à vérifier et le gaz à introduire jusqu'à ce que la pression soit rétablie, lesdits moyens de liaison étant pourvus d'un siège extérieur taraudé (2, 3), caractérisé en ce que ladite soupape (1) est composé d'un corps comprenant une fermeture à aiguille (8) coulissant dans un trou axial (6) reliant le siège extérieur taraudé (2, 3) destiné au montage d'un manomètre, un ensemble fournissant le gaz sous pression à appliquer, un siège fraisé inférieur situé dans l'amortisseur (14), l'extrémité supérieure de ladite fermeture à aiguille étant associée à un écrou (13) disposé de manière concentrique audit siège taraudé (2, 3) à l'intérieur d'un chambrage (4) tandis que son extrémité inférieure porte une tête d'obturation (9) pourvue d'un joint annulaire (10) assurant l'étanchéité dudit siège fraisé par rapport au gaz sous presion.

2. Dispositif suivant la revendication précédente, caractérisé en ce que la fermeture à aiguille (8) est constituée par une tige dont le diamètre est tout à fait plus petit que celui du trou (6).

3. Dispositif suivant les revendications précédentes, caractérisé en ce que l'écrou (13) provoque l'ouverture de la soupape à aiguille (1) lorsque le gaz se trouve à une pression plus importante que celle régnant dans l'amortisseur (14) jusqu'à ce que la valeur désirée soit atteinte, le gaz ne pouvant s'échapper vers l'extérieur à partir de l'intérieur de l'amortisseur.
